# EUROPEAN PATENT SPECIFICATION

(11) **EP 4 320 564 B1**
(45) Date of publication and mention of the grant of the patent: **24.07.2024**
(21) Application number: 23736260.3
(22) Date of filing: 27.06.2023
(51) Int. Cl.: G06Q 10/00, G06Q 10/08, G06Q 10/083, G06Q 10/0836

(54) **A SERVICE POINT FOR DISTRIBUTION OF A PLURALITY OF PARCELS AND A METHOD FOR CONTROLLING A PARCEL DISTRIBUTION AT THE SERVICE POINT**
DIENSTSTELLE ZUR VERTEILUNG MEHRERER PAKETE UND VERFAHREN ZUR STEUERUNG DER PAKETVERTEILUNG AN DER DIENSTSTELLE
POINT DE SERVICE POUR LA DISTRIBUTION D'UNE PLURALITÉ DE COLIS ET PROCÉDÉ DE COMMANDE D'UNE DISTRIBUTION DE COLIS AU POINT DE SERVICE

(30) Priority: 29.06.2022 EP 22181976
(43) Date of publication of application: 14.02.2024
(73) Proprietor: SwipBox Development ApS, 6400 Sønderborg (DK)
(72) Inventor: KACZMAREK, Allan, 6400 Sønderborg (DK)
(74) Representative: Patrade A/S
(86) International application number: PCT/EP2023/067419
(87) International publication number: WO 2024/003025

(56) References cited:
- EP-A1- 3 755 187
- US-B2- 10 909 790

## Description

### Field of the Invention

The present invention relates to a service point comprising both a parcel shop and a parcel locker, wherein receivers of parcels can collect parcels at the service point from either the parcel shop or the parcel locker, wherein a service point controller ensures that the parcel locker is continuously refilled with parcels in order to increase the efficiency of the service point.

### Background of the Invention

Today, parcel shops and parcel lockers are used for distributing the increasing number of parcels being sent due to e-commerce.

Parcel shops are, however, relatively labor intensive as an employee must find the parcel to be collected and the receiver must show proof of identity before collecting the parcel and in some cases, it requires t a signature.

Parcel lockers are not labor intensive as a user can unlock a compartment using a third-party device, like a smart phone, or by using a touch screen forming part of the parcel locker. However, the capacity of the parcel lockers is lower than parcel shops, partly because most parcel lockers are only filled with parcels once a day. Furthermore, some parcels are only collected after several days. This will further lower the overall throughput of parcels in the parcel lockers.

WO2019161872 describes a parcel locker and how to communicate with the parcel locker. The parcel locker can be part of a parcel shop. However, the parcel locker does not interact with the parcel shop.

US 10909790B2 describes a compartment system and a method involving obtaining an identifier at a control unit of a compartment system having compartments provided with respective locks and respective lock control units that are configured to communicate with the control unit. The compartment system is controlled as a function of identifiers.

Thus, there is a need for a solution which can reduce the labor intensity of parcel shops by increasing the throughput of parcel lockers.

### Object of the Invention

It is an object of the invention to provide a service point solving challenges related to manned parcel shops and efficient usage of parcel lockers.

### Description of the Invention

An object of the invention is achieved by a service point for distribution of a plurality of parcels.

The service point comprises a parcel shop being a manned parcel shop for manually handing over parcels. The parcel shop comprises
- a storage room for storing the plurality of parcels, and
- a shop instruction unit including a display for displaying instructions.

The service point further comprises a parcel locker positioned inside the parcel shop or positioned in a near vicinity of the parcel shop. The parcel locker comprising
- a plurality of compartments for storing parcels and the plurality of compartments comprise a compartment door provided with a lock; and
- a locker communication unit.

The service point further comprises a service point controller comprising
- a computer readable storage for storing thereon a parcel ID of each of the plurality of parcels and for storing a service point parcel distribution including a parcel position of each of the plurality of parcels within the service point;
- a service point communication unit for wired or wireless communication with the shop instruction unit, the locker communication unit, third-party devices and optionally, a distribution server; and
- a service point processor configured to send instructions to the shop instruction unit about refilling the parcel locker as a function of the service point parcel distribution.

Thereby, a combined service point is provided which reduces the need for manual labour while increasing a parcel throughput of a parcel locker. The effect will be even greater if additional algorithms are used for optimising the parcel distribution between the parcel shop and the parcel locker.

The parcel shop may be any common parcel shop, and the parcel shop may be part of a larger store or shop which provides other services. Likewise, the storage room may be a common storage room.

The shop instruction unit may be a computer with a display or a laptop or a tablet or smart phone or smart device. The shop instruction unit may be two or more devices such as a computer with a display and a tablet where the tablet is portable and used when refilling the parcel locker.

The shop instruction unit will provide instructions to the employees at the parcel shop about refilling the parcel locker as a function of the service point parcel distribution. This may be in the form of that 50 % of the plurality of compartments are empty and that the parcel locker must be refilled. It is more efficient to deliver parcels through the parcel locker as the computer system ensures that the correct receiver of a parcel receives the parcel, while manual handing also requires manual confirmation. Thus, the employee is also enticed to refilling the parcel locker.

The parcel locker may be any known parcel locker having the features described above. The parcel locker may receive power from a battery, a power cord or both. The locker communication unit may be configured for wireless or wired communication such as ethernet and/or Bluetooth and/or WLAN and/or USB and/or Wi-Fi and/or NFC.

The locks of the plurality of compartments are controlled electronically and will open once the locks receive instructions to open. Parcels may then be stored in or collected from the open compartments. The instructions will typically be sent from the locker communication unit to the lock.

The parcel locker will in most cases be positioned inside the parcel shop. This will shorten the distance between the storage room and the parcel locker and as a result the refilling of the parcel locker can be performed faster. However, the parcel locker can be positioned in the near vicinity of the parcel shop such as at the front of the parcel shop or at the parking lot of the parcel shop or the like. If the parcel locker is positioned in the near vicinity, then the parcel locker should be positioned as close to the parcel shop as possible to increase the refilling efficiency.

Throughout this application parcel locker is mentioned in singular, however, there may be one, two or more parcel lockers at the service point.

The service point controller functions as a local control centre for the service point as it will control the service point parcel distribution between the storage room and the parcel locker. The service point controller will be programmed for optimising the throughput of the parcel locker and thus, the service point processer will send instructions to the shop instruction unit about refilling the parcel locker as a function of the service point parcel distribution.

As an example, the service point may store 100 parcels, where 70 parcels are stored at the storage room and 30 parcels are stored in the parcel locker. After 8 hours, 30 parcels are collected from the storage room and 15 parcels are collected from the parcel locker. Thus, the service point parcel distribution will be left with 40 parcels that are stored at the storage room and 15 parcels that are stored in the parcel locker. In this case, the service point processor may send instructions to the shop instruction unit that the parcel locker should be refilled such that the service point parcel distribution will be left with 25 parcels in the storage room and 30 parcels in the parcel locker.

The service point controller further enables that the service point can manage receiving packages from multiple courier services without increasing the complexity at the service point or for the parcel shop since the service point controller manages the service point parcel distribution and is not affected by which courier service is used. Again, the collection of parcels from the parcel locker will likewise be simpler when the service point receives parcels from different courier services, as handling of the parcel is done electronically without the need of an employee, while the same employee might need to manually handle the handing over of a parcel differently depending on the courier service.

The service point controller may be in direct or indirect communication with a distribution server, which tracks all parcels in a distribution network including a plurality of parcel shops and/or parcel lockers. In some embodiments the distribution server may further also track delivery of parcels for home delivery. The service point can run autonomous without receiving any instructions or information from an external distribution server. This will also ensure parcel delivery in case of a centralised breakdown.

In an aspect, the service point controller may, upon a collection request of a parcel having a parcel ID from a third-party device, be adapted to perform the following steps as a function of the position of the parcel;
- transmitting instructions to the locker communication unit, which instructions causes the lock of the compartment holding the parcel with the parcel ID to unlock; or
- transmitting instructions to the shop instruction unit for collecting and handing over the parcel with the parcel ID.

Thereby, the receiver of the parcel with the parcel ID will be able to collect the parcel by simply sending a collection request and the service point controller will ensure that instructions are sent in the correct direction i.e. either to the parcel locker or to the shop instruction unit from where the receiver can collect the parcel.

The service point controller may send information to the receiver about where to collect the parcel upon receiving the collection request. The receiver of a parcel with parcel ID may not be informed ahead of the collection request whether the parcel is positioned in the parcel locker or in the storage room, as this will allow changing the service point parcel distribution without confusing a receiver since the parcel to be collected may have been moved from the storage room to the parcel shop a few minutes before receiving the collection request and the receiver would believe that the parcel should be collected from the parcel shop if the information has not been pushed to the receiver. The service point controller tracks where the parcel is stored on a local level and thus, may simply inform the receiver without any confusion.

The device used by the receiver, or the service point controller may communicate with the distribution server about collection of the parcel having the parcel ID, such that the parcel is also tracked on a global level.

In an aspect, the service point controller may comprise a clock unit and the service point controller may be configured to storing a collection event and time of the collection event on the computer readable storage, thereby generating local historical event data.

The service point processor is further configured to send instructions to the shop instruction unit about refilling the parcel locker as a function of the local historical event data and the service point parcel distribution.

Each service point has different collection patterns and the tracking of the collection pattern of parcels will enable the service point to optimise the service point parcel distribution and to choose the best timeslot for refilling the parcel locker. Many parcel shops in Denmark have a local minimum of busyness around 12:00 pm and thus, it may be an optimal timeslot for refilling the parcel locker. However, in some cases it may be more optimal to wait until 15:00 pm to refill the parcel locker such that more parcels could be collected from the parcel locker when refilling prior to rush hour from 16:00 pm to 18:00 pm. This should be seen as examples, as there will be a great spread between different parcel shops. The aim of the service point controller is to ensure that as many parcels are stored in the parcel locker as possible while making the refilling of the parcel locker as easy as possible, i.e. the refilling is preferably performed at times with lower business.

In some embodiments, the storage room may comprise a storage room capacity and the parcel locker may comprise a parcel locker capacity, wherein the ratio between the parcel locker capacity and the storage room capacity is 1:2 or 1:3 or 1:4 or 1:5.

In an aspect, the service point is part of a convenience store or a supermarket or a retail store. This enables the receiver to collect parcels while doing everyday shopping.

In these embodiments, the service point controller functions as a master controller, as the service point controller supports the employees at the convenience store or a supermarket or a retail store for when the parcel locker should be refilled such that decisions made by persons at the service point can be reduced as much as possible. Thereby, the additional workload of also being a service point controller is reduced which is important for convenience stores or supermarkets or retail stores as parcel handling is secondary business for attracting customers.

In an aspect, the service point controller may receive historical store data of the convenience store or the supermarket or the retail store, where the historical store data includes time-sequenced busyness data. The service point controller is further configured to send instructions to the shop instruction unit about refilling the parcel locker as a function of the historical store data and the service point parcel distribution.

This will enable the service point controller to provide better instructions faster when setting up a service point according to the invention. The service point may collect future data, however, it will take one year to receive one year of data. Thus, by utilising the historical store data, the service point controller can provide better instructions from day 1.

In an aspect, the service point may be an autonomous service point and the decision whether a parcel is stored in the storage room or in the parcel locker is decided by the autonomous service point.

Thus, the service point can receive parcels and hand over parcels without communication with an external distribution server and without receiving instructions, the positions of the parcels within the service point. Thereby, the service point can function and handover parcels to receivers even if the external distribution server is down or not available. This will make the service point more robust.

In an aspect, the storage room may comprise a plurality of marked parcel positions, wherein the service point controller being configured to send instructions to the shop instruction unit about storing a parcel with a specific parcel ID at a specific marked parcel position and/or being configured to receive information of a parcel with specific parcel ID being stored at a marked parcel position.

Personnel of the parcel shop may simply place the parcels at specific marked parcel positions where there is space. The personnel may during the storing or afterwards, provide information to the service point controller about where the different parcels are positioned.

This will further enhance the instructions sent to the shop instruction unit as the instruction may be to take the parcel at parcel position 1-5 in the storage room and place the parcel in the parcel locker row 3 column 2. Also, the instructions may be to take parcel at parcel position 1-5 in the storage room and hand the parcel to a receiver. This will significantly increase the efficiency of the service point and the refilling of the parcel locker.

The marked parcel positions may be in the form of numbers and/or letters and/or symbols such that the marked parcel positions can be easily identified by an employee.

Furthermore, many distribution systems know the volume and shape of the parcels to a high degree. A parcel locker has pre-defined compartments with a static volume and static shape. Thus, the service point controller can in these situations further perform the step of refilling as a function to utilize the compartments such that the volume of the compartments is optimised.

In an aspect, the service point controller may track a parcel locker storage time for each parcel stored in the parcel locker, wherein the service point controller is further configured to send instructions to the shop instruction unit about replacing one or more parcels stored in the parcel locker as a function of the parcel locker storage time.

The handling of parcels will always be most efficient if the parcels are delivered through the parcel locker. However, this is not the case if the parcels are not collected. In many cases, a parcel is collected within one day, however, if the parcel is not collected within 24 hours, then the risk of the parcel not being collected or collected at a later time increases significantly. In these cases, the parcel is just taking up room in the parcel locker. Thus, the service point controller can further increase the efficiency by removing parcels which are not being collected.

In many cases, the service point controller will send instructions to remove and replace parcels after 24 hours of no collection since the last refilling.

In some cases, the service point controller may receive a collection pattern of the receiver of a parcel and the service point controller may send instructions according to the collection pattern. If the receiver in 80 % of the cases collects parcels in the weekend, then the parcel should not be positioned in the parcel locker before the weekend as it will in 80 % of the cases remain uncollected until the weekend. Furthermore, if the parcel has not been collected on a Sunday, then the parcel should be positioned in the storage room as it will likely not be collected before the next weekend.

An object of the invention is achieved by a method for controlling a service point parcel distribution at a service point. The method comprises steps of
- receiving at the service point, a plurality of parcels with parcel IDs;
- storing the plurality of parcels in the storage room and the parcel locker; and after a time period, the following step is performed as a function of instructions received by the service point controller;
- refilling the parcel locker by placing parcels from the storage room in the parcel locker.

As previously mentioned for the service point embodiment, this enables that more parcels are being delivered by the parcel locker which is more time efficient than the manually handing over of parcels at the parcel shop. The step of refilling is performed as a function of instructions received by the service point controller as the personnel may not know how many parcels have already been collected from the parcel locker.

In some embodiments, the step of storing may also be solely performed as a function of instructions received by the service point controller.

Furthermore, the storing step and receiving step can be performed by multiple different courier services.

In an aspect, the step of refilling may be performed as a function of local historical event data and the service point parcel distribution, wherein the local historical event data includes collection events and time of said collection events.

This will further increase the efficiency of the service point, as the service point parcel distribution can be changed, where there historically is a low point in collection of the parcels.

In an aspect, the method further comprises steps of
- removing a parcel stored from the parcel locker and storing said parcel in the storage room, while storing a parcel from the storage room in the parcel locker;
wherein the step of removing is performed as a function of a parcel locker storage time of the parcels stored in the parcel locker.

As previously mentioned, the chance of a parcel being collected falls significantly within the first 24 hours. Thus, if a parcel is not collected within 24 hours, then the parcel is just taking up a compartment in the parcel locker and this decreases the parcel locker efficiency as the compartment in the parcel locker may distribute two, three or more parcels if the parcel is collected within 24 hours.

Thus, the removing and storing is in effect a single step of replacing a parcel in the parcel locker with a parcel from the storage room.

In an aspect, the method may further comprise a step of
- receiving a receiver collection pattern of the plurality of parcels from a distribution server, which receiver collection pattern includes historical data of collection times of receivers of the plurality of parcels,
wherein the step of storing, the step of refilling and/or the step of removing is performed as a function of the receiver collection pattern.

The different receivers of the plurality of parcels have individual collection patterns. Some receivers choose to collect the parcel before work or at a lunch break or after work, while others may only collect parcels at the weekend. The distribution server will have this data of the receivers and by utilising this data, the method and the service point becomes even more efficient as the service point parcel distribution is further chosen, such that the parcel locker is filled with parcels which is most likely to be collected within a short time period.

In an aspect, the method comprises a step of
- receiving a preferred collection time slot provided by a receiver of a parcel,
wherein the step of storing, the step of refilling and/or the step of removing is performed as a function of the preferred collection time slot.

This will further increase the efficiency, as the receiver is enabled to inform about a preferred collection time slot in which the method will try to ensure that the parcel to be collected by the receiver is placed in the parcel locker.

An object of the invention is achieved by a method for collection of a parcel with a parcel ID at a service point. The method comprises steps of
- transmitting a collection request of a parcel with a parcel ID to the service point controller;
- receiving from the service point controller, a parcel position of the parcel with a parcel ID; wherein one of the following steps is performed as a function of the parcel position
   - transmitting instructions to the locker communication unit, which instructions cause the lock of the compartment holding the parcel with the parcel ID to unlock: or
   - transmitting instructions to the shop instruction unit for collection and handing over the parcel with the parcel ID; and
   - collecting the parcel with the parcel ID.

The method describes how a parcel is collected from a service point according to this invention, wherein the service point controller is a central part as it directs the handing over of the parcel.

Depending on the relative position between the parcel shop and the parcel locker, the service point controller may inform the device whether the parcel is to be collected from the parcel shop or the parcel locker.

In an aspect, the step of transmitting a collection request is performed by a third-party device, wherein the third-party device is a smart phone or laptop or tablet or a local parcel shop unit.

The method enables that any device can be used as long as it can communicate with the service point controller.

### Description of the Drawing

Embodiments of the invention will be described in the figures, whereon:
Fig. 1 illustrates controlling parcel distribution of a plurality of parcels at a service point comprising a parcel shop and a parcel locker;
Fig. 2 illustrates a service point comprising a parcel shop and a parcel locker;
Fig. 3 illustrates another embodiment of a service point comprising a parcel shop and a parcel locker;
Fig. 4 illustrates various data which can be utilised by a service point controller for optimising a service point; and
Fig. 5 illustrates a smart device transmitting a collection request to a service point controller of a service point.

### Detailed Description of the Invention

| **Item** | **No** |
|---|---|
| Service point | 10 |
| Parcel shop | 20 |
| Storage room | 22 |
| Shop instruction unit | 24 |
| Parcel locker | 30 |
| Plurality of compartments | 32 |
| Compartment door | 34 |
| Locker communication unit | 38 |
| Service point controller | 50 |
| Computer readable storage | 52 |
| Service point communication unit | 54 |
| Service point processor | 56 |
| Clock unit | 58 |
| Local historical event data | 70 |
| Historical store data | 72 |
| Receiver collection pattern | 74 |
| Third-party devices | 80 |
| Distribution server | 90 |
| Method for controlling a parcel distribution at a service point | 100 |
| Receiving | 110 |
| Storing | 120 |
| Refilling | 130 |
| Removing | 140 |
| Receiving | 150 |
| A method for collection of a parcel with a parcel ID at a service point | 200 |
| transmitting | 210 |
| | |

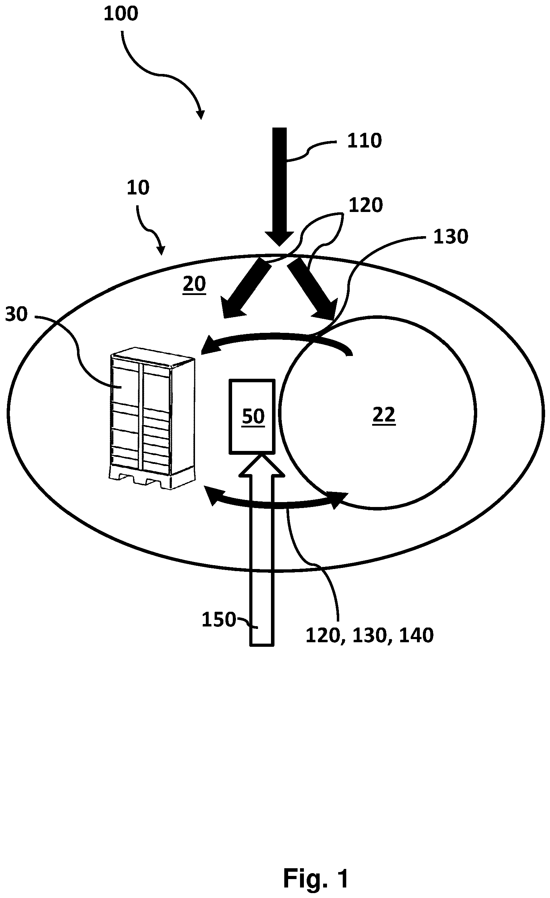

Fig. 1 illustrates controlling a parcel distribution of a plurality of parcels at a service point 10 comprising a parcel shop 20 and a parcel locker 30. The service point 10 further comprises a service point controller 50 which is adapted to keeping track of the plurality of parcels and the parcel distribution between the parcel shop 20 and the parcel locker 30. Embodiments of the parcel shop 20, the parcel locker 30 and the service point controller 50 are described in greater detail in the later figures.

The service point 10 will receive 110, a plurality of parcels with parcel IDs. This step of receiving 110 may be performed one or more times per week or day from various courier services. The personnel or the courier will perform a step of storing 120 the plurality of parcels in a storage room 22 (not shown) of the parcel shop 20 and the parcel locker 30 in the simplest embodiment. The parcel locker 30 is filled with random parcels of the plurality of parcels until the parcel locker 30 is full and any remaining parcels will be stored 120 in the storage room 22. In other embodiments, the step of storing 120 is performed as a function of instructions received by the service point controller 50.

The service point controller 50 may have information regarding parcel size of each parcel which is common in parcel distribution. Thereby, parcels are matched with parcel compartments 32 (shown but not marked in the present figure) with a complementary size such that the space is utilized. The service point controller 50 may also use local historical event data 70, historical store data 72 and receiver collection patterns 74 for generating the instructions related to the step of storing 120.

A step of refilling 130 the parcel locker 30 by placing parcels from the storage room 22 in the parcel locker 30 is performed after a time period as a function of instructions received by the service point controller 50. The time period can be any time period depending on how fast the parcel locker 30 is emptied.

Thereby, a method 100 for controlling a service point parcel distribution at a service point is performed, wherein the number of parcels in the parcel locker 30 is as high as possible at any time since it is more efficient if a parcel is collected from the parcel locker 30 than from the parcel shop 20.

There may be a further step of removing 140 a parcel stored from the parcel locker 30 and storing 120 the said parcel in the storage room 22, while storing 120 a parcel from the storage room 22 in the parcel locker 30, wherein the step of removing 140 is performed as a function of a parcel locker storage time of the parcels stored in the parcel locker 30. If the parcel locker storage time exceeds 24 hours, then the chance of a parcel being collected drops significantly and the chance that the parcel is collected within the day or hour also drops significantly, i.e. the parcel will simply take up a parcel compartment 32. In this case, the service point controller 50 will provide instructions to replace the parcel with another parcel which has a higher chance of being collected. This will increase the throughput of the parcel locker 30 and thereby the entire service point.

There may be a further step of receiving 150 a receiver collection pattern 74 (not marked in fig. 1) of the plurality of parcels from a distribution server 90, which receiver collection pattern 74 includes historical data for collection times of receivers of the plurality of parcels,
wherein the step of storing 120, the step of refilling 130 and/or the step of removing 140 is performed as a function of the receiver collection pattern 74 for the purpose of increasing the efficiency of the service point 10.

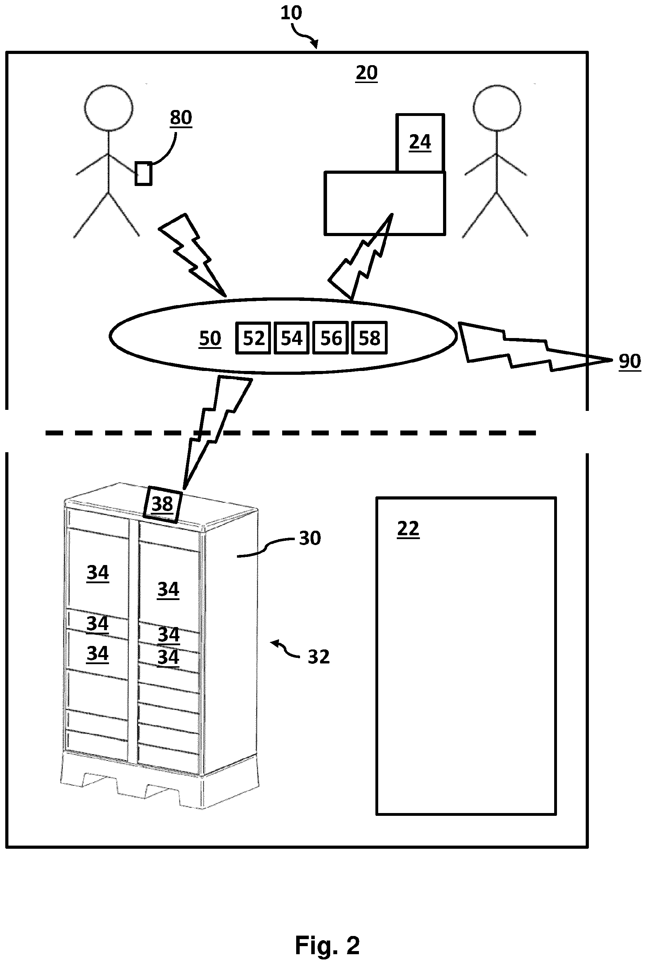

Fig. 2 illustrates a service point 10 comprising a parcel shop 20 and a parcel locker 30.

The parcel shop 20 is a manned parcel shop for manually handing over parcels. The parcel shop (20) comprises a storage room (22) for storing the plurality of parcels, and a shop instruction unit (24) including a display for displaying instructions. The displayed instructions may cause the personnel of the parcel shop to collect a parcel or to refill the parcel locker 30 or remove a parcel from the parcel locker 30 or other actions related to the service point 10.

The parcel locker 30 is in this embodiment positioned inside the parcel shop 20. The parcel locker 30 comprises a plurality of compartments 32 for storing parcels. The plurality of compartments 32 comprises a compartment door 34 provided with a lock, a locker communication unit 38 for communication with a service point controller 50.

The service point 10 further comprises a service point controller 50. The service point controller 50 comprises a computer readable storage 52 for storing thereon a parcel ID of each of the plurality of parcels and for storing a service point parcel distribution including a parcel position of each of the plurality of parcels within the service point 10.

The service point controller 50 comprises a service point communication unit 54 for wired or wireless communication with the shop instruction unit 24, the locker communication unit 38, third-party devices 80 and optionally, a distribution server 90. The communications in the figures are represented by a lightning bolt, however, that is purely a representation.

The service point controller 50 comprises a service point processor 56 configured to send instructions to the shop instruction unit 24 about refilling the parcel locker 30 as a function of the service point parcel distribution.

The service point controller 50 may further comprise a clock unit 58 such that the service point controller 50 may store a collection event and time of the collection event on the computer readable storage 52, thereby generating local historical event data 70 (not marked in figure 2); wherein the service point processor 56 is further configured to send instructions to the shop instruction unit 24 about refilling the parcel locker 30 as a function of the local historical event data 70 and the service point parcel distribution.

The collection event and time of the collection event may also be sent to a distribution server 90 such that the distribution server 90 can collect data relating to the local historical event data 70 and for generating a receiver collection pattern 74 (not marked in figure 2) of the receiver of the parcel, which can be used for optimising the service point parcel distribution such that as many parcels are handled through the parcel locker 30 as possible.

In the figure, a receiver of a parcel with specific parcel ID is illustrated in the upper left corner of the figure. The receiver uses a third-party device 80 such as a smart phone or tablet or similar for sending a collection request of a parcel with a parcel ID to the service point controller 50. The service point controller 50 being adapted to perform the following steps as a function of the parcel position of the parcel in the collection request:
- transmitting instructions to the locker communication unit 38, which instructions causes the lock of the compartment 32 holding the parcel with the parcel ID to unlock after which the receiver can collect the parcel; or
- transmitting instructions to the shop instruction unit 24 for collecting and handing over the parcel with the parcel ID after which the personnel of the parcel shop 20 will collect the parcel from the storage room 22.

The storage room 22 and the parcel locker 30 are shown with a dashed line as the exact positioning within the parcel shop 20 is not important, however, it will be more efficient to have both the storage room 22 and the parcel locker 30 as close to the shop instruction unit 24 as possible.

The service point controller 50 may inform the receiver through the third-party device 80 whether the parcel is placed in the parcel locker 30 or stored 120 in the storage room 22.

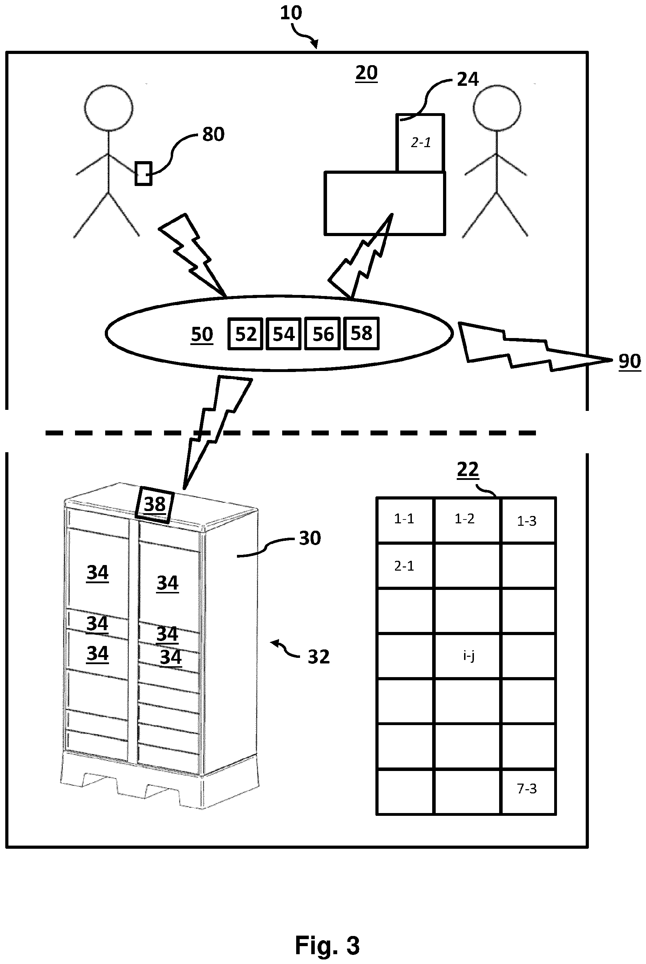

Fig. 3 illustrates another embodiment of a service point 10 comprising a parcel shop 20 and a parcel locker 30. The embodiment differs from the embodiment in figure 2 by the storage room 22 comprising a plurality of marked parcel positions 1-1, 1-2, 1-3, 2-1... i-j. In the shown embodiment i=[1:7] and j=[1:3], however i,j may be any real number. The numbering may be different as long as each parcel position is unique.

In this case, the service point controller 50 is configured to send instructions to the shop instruction unit 24 about storing a parcel with a specific parcel ID at a specific marked parcel position or the service point controller 50 is configured to receive information of a parcel with specific parcel ID being stored at a marked parcel position such that upon a collection request, the service point controller 50 can provide a specific marked parcel position of the parcel. In the figure, the parcel to be collected is placed in marked parcel position 2-1 as can be seen on the shop instruction unit 24. Thereby, the efficiency of the service point is further increased.

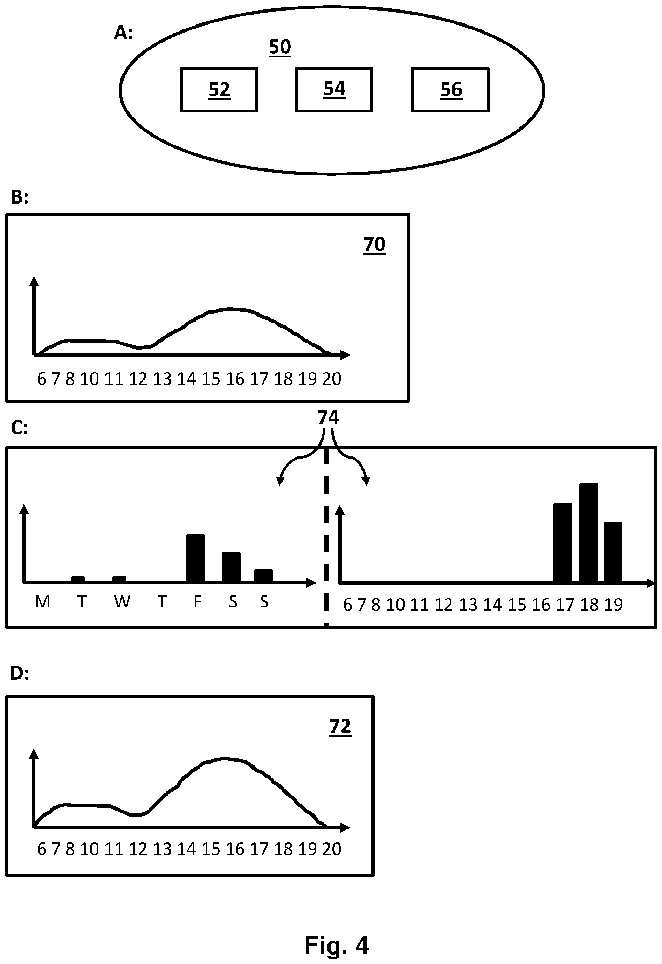

Fig. 4 illustrates various data which can be utilised by a service point controller 50 for optimising a service point 10 as shown in anyone of figures 1-3 above. Figure 4A shows that the service point controller 50 will at least comprise a computer readable storage 52 for storing thereon a parcel ID of each of the plurality of parcels and for storing a service point parcel distribution including a parcel position of each of the plurality of parcels within the service point 10 and the service point controller 50 comprises a service point communication unit 54 for wired or wireless communication with the shop instruction unit 24, the locker communication unit 38, third-party devices 80 and optionally, a distribution server 90. The service point controller 50 comprises a service point processor 56 configured to send instructions to the shop instruction unit 24 about refilling the parcel locker 30 as a function of the service point parcel distribution and optionally, other data shown in figures 4B to 4D.

Figure 4B shows local historical event data 70 of collection events as a function of time, wherein the first axis represents time during a day such as from 06:00 a.m. until 08:00 p.m. depending on the opening hours of the service point. The second axis represents the number of events. The shown graph may be for an entire year and this data is used to predict collection patterns of the receivers. However, the local historical event data 70 may be divided into weekdays and weekends as the collection pattern will typically differ. In this case, the service point processor 56 may be further configured to send instructions to the shop instruction unit 24 about refilling the parcel locker 30 as a function of the local historical event data 70 and the service point parcel distribution such that the parcel locker is filled prior in time to collection events.

Figure 4C shows a receiver collection pattern connected to a receiver. In the first graph, the first axis represents the different seven days (Monday to Sunday), and the second axis represents collection events. In the second graph, the first axis represents time during a day such as from 06:00 a.m. until 07:00 p.m. depending on the opening hours of the service point. The second axis represents the number of collection events. This specific receiver mainly collects parcels in the weekend and has exclusively collected parcels at or after 05:00 p.m. Thus, a parcel for this receiver should not be placed in a parcel locker 30 until Friday and preferably just before 05:00 p.m. as this will increase a parcel throughput of the parcel locker 30 compared to placing the parcel in the parcel locker on a Wednesday or another weekday. Thus, the step of storing, the step of refilling and/or the step of removing is performed as a function of the receiver collection pattern. For example, if the parcel has not been collected from the parcel locker 30 during the weekend, then, the parcel should be removed from the parcel locker 30.

Figure 4D shows historical store data 72 of a convenience store or a supermarket or a retail store, wherein the historical store data 72 is inclusive time-sequenced busyness data. The first axis represents time during a day such as from 06:00 a.m. until 08:00 p.m. depending on the opening hours of the service point. The second axis represents the number of events. Thus, the service point 10 can be installed in a convenience store or a supermarket or a retail store and from day 1, be able to predict timeslots with many collection events as there is a correlation between busyness or number of store visits and the number of parcels being collected. Thus, the service point controller 50 is further configured to send instructions to the shop instruction unit 24 about refilling the parcel locker 30 as a function of the historical store data 72 and the service point parcel distribution.

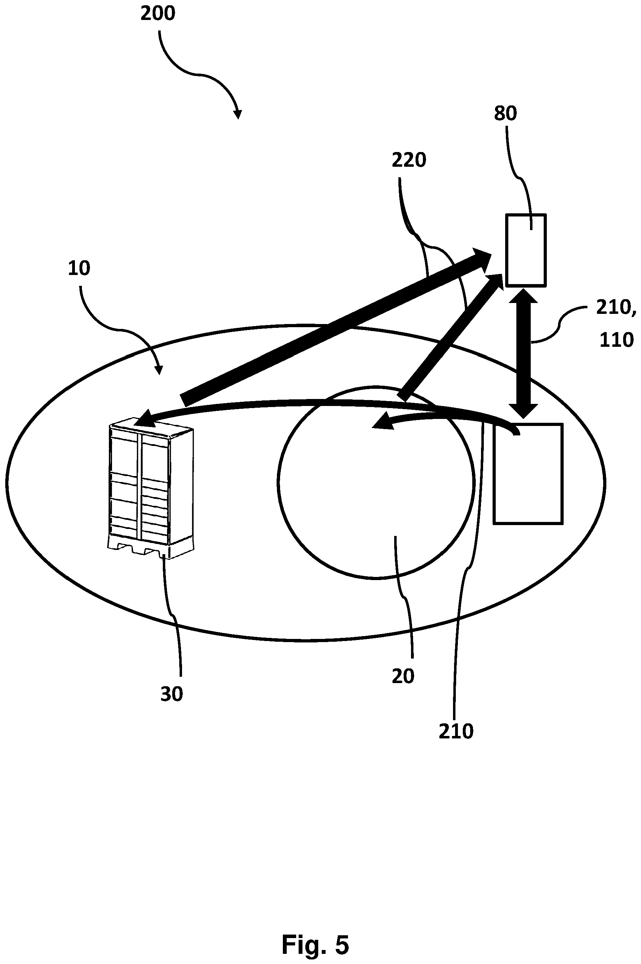

Fig. 5 illustrates a third-party device 80 transmitting a collection request to a service point controller 50 of a service point 10. The figure also illustrates a method 200 for collection of a parcel with a parcel ID at the service point 10. The service point 10 further comprises a parcel shop 20 and a parcel locker 30. The service point 10 may be as shown in figure 2 or 3.

The method 200 comprises a step of transmitting 210 a collection request of a parcel with a parcel ID to the service point controller 50. This is performed by the receiver using a third-party device 80 such as a smart phone or tablet.

The device 80 performs a step of receiving 110 from the service point controller 50, a parcel position of the parcel with a parcel ID; wherein one of the following steps is performed by the service point controller 50 as a function of the parcel position
- transmitting 210 instructions to the locker communication unit 38, which instruction causes a lock of the compartment 32 holding the parcel with the parcel ID to unlock: or
- transmitting 210 instructions to the shop instruction unit 24 for collection and handing over the parcel with the parcel ID; and
- This is followed by a step of collecting 220 the parcel with the parcel ID by the receiver.

## Claims

1. A service point (10) for distribution of a plurality of parcels, wherein the service point (10) comprises
- a parcel shop (20) being a manned parcel shop for manually handing over parcels, the parcel shop (20) comprises
- a storage room (22) for storing the plurality of parcels, and
- a shop instruction unit (24) including a display for displaying instructions;
- a parcel locker (30) positioned inside the parcel shop (20) or positioned in a near vicinity of the parcel shop (20), the parcel locker (30) comprising
- a plurality of compartments (32) for storing parcels and the plurality of compartments (32) comprise a compartment door (34) provided with a lock; and
- a locker communication unit (38), and
wherein the parcel shop (20) further comprises a service point controller (50),
the service point controller (50) comprising
- a computer readable storage (52) for storing thereon a parcel ID of each of the plurality of parcels and for storing a service point parcel distribution including a parcel position of each of the plurality of parcels within the service point (10);
- a service point communication unit (54) for wired or wireless communication with the shop instruction unit (24), the locker communication unit (38), third-party devices (80) and optionally, a distribution server (90); and **characterised in that**
- a service point processor (56) configured to send instructions to the shop instruction unit (24) about refilling the parcel locker (30) as a function of the service point parcel distribution.

2. A service point (10) according to claim 1, wherein the service point controller (50), upon a collection request of a parcel with a parcel ID from a third-party device (80), is adapted to perform the following steps as a function of the parcel position;
- transmitting instructions to the locker communication unit (38), which instructions causes the lock of the compartment (32) holding the parcel with the parcel ID to unlock; or
- transmitting instructions to the shop instruction unit (24) for collecting and handing over the parcel with the parcel ID.

3. A service point (10) according to claim 1 or 2, wherein the service point controller (50) comprises a clock unit (58) and the service point controller (50) is configured to storing a collection event and time of the collection event on the computer readable storage (52), thereby generating local historical event data (70); wherein the service point processor (56) is further configured to send instructions to the shop instruction unit (24) about refilling the parcel locker (30) as a function of the local historical event data (70) and the service point parcel distribution.

4. A service point (10) according to anyone of the preceding claims, wherein the service point (10) is part of a convenience store or a supermarket or a retail store.

5. A service point (10) according to claim 5, wherein the service point controller (10) receives historical store data (72) of the convenience store or the supermarket or the retail store, where the historical store data (72) including time-sequenced busyness data and wherein the service point controller (50) is further configured to send instructions to the shop instruction unit (24) about refilling the parcel locker (30) as a function of the historical store data (72) and the service point parcel distribution.

6. A service point (10) according to anyone of the preceding claims, wherein the service point (10) is an autonomous service point (10) and the decision whether a parcel is stored in the storage room (22) or in the parcel locker (30) is decided by the autonomous service point (10).

7. A service point (10) according to anyone of the preceding claims, wherein the storage room (22) comprises a plurality of marked parcel positions, wherein the service point controller (50) being configured to send instructions to the shop instruction unit (24) about storing a parcel with a specific parcel ID at a specific marked parcel position and/or being configured to receive information of a parcel with specific parcel ID being stored at a marked parcel position.

8. A service point (10) according to anyone of the preceding claims, wherein the service point controller (50) tracks a parcel locker storage time for each parcel stored in the parcel locker (30), wherein the service point controller (50) is further configured to send instructions to the shop instruction unit (24) about replacing one or more parcels stored in the parcel locker (30) as a function of the parcel locker storage time.

9. A method (100) for controlling a service point parcel distribution at a service point (10) according to anyone of claims 1-8; wherein the method (100) comprises steps of
- receiving (110) at the service point (10) a plurality of parcels with parcel IDs;
- storing (120) the plurality of parcels in the storage room (22) and the parcel locker (30); and after a time period, the following step is performed as a function of instructions received by the service point controller (50):
- refilling (130) the parcel locker (30) by placing parcels from the storage room (22) in the parcel locker (30).

10. A method (100) according to claim 9, wherein the step of refilling (130) is performed as a function of local historical event data and the service point parcel distribution, wherein the local historical event data includes collection events and time of said collection events.

11. A method (100) according to claim 9 or 10, wherein the method (100) further comprises steps of
- removing (140) a parcel stored from the parcel locker and storing said parcel in the storage room (22), while storing (120) a parcel from the storage room (22) in the parcel locker (30);
wherein the step of removing (140) is performed as a function of a parcel locker storage time of the parcels stored in the parcel locker (30).

12. A method (100) according to anyone of claims 9-11, wherein the method (100) further comprises a step of
- receiving (150) a receiver collection pattern (74) of the plurality of parcels from a distribution server (90), which receiver collection pattern (74) includes historical data for collection times of receivers of the plurality of parcels,
wherein the step of storing (120), the step of refilling (130) and/or the step of removing (140) is performed as a function of the receiver collection pattern (74).

13. A method (100) according to anyone of claims 9-11, wherein the method (100) comprises a step of
- receiving (150) a preferred collection time slot provided by a receiver of a parcel, wherein the step of storing (120), the step of refilling (130) and/or the step of removing (140) is performed as a function of the preferred collection time slot.

14. A method (200) for collection of a parcel with a parcel ID at a service point (10) according to anyone of claims 1-8, wherein the method (200) comprises steps of
- transmitting (210) a collection request of a parcel with a parcel ID to the service point controller (50);
- receiving (110) from the service point controller (50) a parcel position of the parcel with a parcel ID; wherein one of the following steps is performed as a function of the parcel position
- transmitting (210) instructions to the locker communication unit (38), which instructions causes the lock of the compartment (32) holding the parcel with the parcel ID to unlock: or
- transmitting (210) instructions to the shop instruction unit (24) for collection and handing over the parcel with the parcel ID; and
- collecting (220) the parcel with the parcel ID.

15. The method (200) for collection of a parcel according to claim 14, wherein the step of transmitting (210) a collection request is performed by a third-party device (80), wherein the third-party device (80) is a smart phone or laptop or tablet or a local parcel shop unit.

## Patentansprüche

1. Dienststelle (10) zur Verteilung mehrerer Pakete, wobei die Dienststelle (10) Folgendes umfasst:
- einen Paketshop (20), der ein bemannter Paketshop zur manuellen Übergabe von Paketen ist, wobei der Paketshop (20) Folgendes umfasst:
- einen Lagerraum (22) zum Lagern der Vielzahl von Paketen und
- eine Shopanweisungseinheit (24), die eine Anzeige zum Anzeigen von Anweisungen beinhaltet;
- ein Paketschließfach (30), das innerhalb des Paketshops (20) oder in unmittelbarer Nähe des Paketshops (20) positioniert ist, wobei das Paketschließfach (30) Folgendes umfasst:
- eine Vielzahl von Fächern (32) zum Lagern von Paketen, wobei die Vielzahl von Fächern (32) eine mit einem Schloss versehene Fachtür (34) umfasst; und
- eine Schließfach-Kommunikationseinheit (38), und
wobei der Paketshop (20) ferner eine Dienststellensteuerung (50) umfasst,
wobei die Dienststellensteuerung (50) Folgendes umfasst:
- einen computerlesbaren Speicher (52) zum Speichern einer Paket-ID jedes der Vielzahl von Paketen darauf und zum Speichern einer Paketverteilung in der Dienststelle, einschließlich einer Paketposition jedes der Vielzahl von Paketen innerhalb der Dienststelle (10);
- eine Dienststellen-Kommunikationseinheit (54) zur drahtgebundenen oder drahtlosen Kommunikation mit der Shopanweisungseinheit (24), der Schließfach-Kommunikationseinheit (38), Drittanbietervorrichtungen (80) und optional einem Verteilungsserver (90); und
**dadurch gekennzeichnet, dass**
- ein Dienststellenprozessor (56) dazu konfiguriert ist, Anweisungen zum Nachfüllen des Paketschließfachs (30) in Abhängigkeit von der Paketverteilung in der Dienststelle an die Shopanweisungseinheit (24) zu senden.

2. Dienststelle (10) nach Anspruch 1, wobei die Dienststellensteuerung (50) dazu ausgelegt ist, bei einer Abholanforderung eines Pakets mit einer Paket-ID von einer Drittanbietervorrichtung (80) in Abhängigkeit von der Paketposition die folgenden Schritte durchzuführen:
- Übertragen von Anweisungen an die Schließfach-Kommunikationseinheit (38), wobei die Anweisungen bewirken, dass das Schloss des Fachs (32), in dem sich das Paket mit der Paket-ID befindet, entriegelt wird; oder
- Übertragen von Anweisungen an die Shopanweisungseinheit (24) zum Abholen und Übergeben des Pakets mit der Paket-ID.

3. Dienstelle (10) nach Anspruch 1 oder 2, wobei die Dienststellensteuerung (50) eine Uhreinheit (58) umfasst und die Dienststellensteuerung (50) dazu konfiguriert ist, ein Abholereignis und die Zeit des Abholereignisses auf dem computerlesbaren Speicher (52) zu speichern, wodurch lokale historische Ereignisdaten (70) generiert werden; wobei der Dienststellenprozessor (56) ferner dazu konfiguriert ist, Anweisungen zum Nachfüllen des Paketschließfachs (30) in Abhängigkeit von den lokalen historischen Ereignisdaten (70) und der Paketverteilung in der Dienststelle an die Shopanweisungseinheit (24) zu senden.

4. Dienststelle (10) nach einem der vorhergehenden Ansprüche, wobei die Dienststelle (10) Teil eines Gemischtwarenladens oder eines Supermarkts oder eines Einzelhandelsgeschäfts ist.

5. Dienststelle (10) nach Anspruch 5, wobei die Dienststellensteuerung (10) historische Geschäftsdaten (72) des Gemischtwarenladens oder des Supermarkts oder des Einzelhandelsgeschäfts empfängt, wobei die historischen Geschäftsdaten (72) zeitgeordnete Auslastungsdaten beinhalten, und wobei die Dienststellensteuerung (50) ferner dazu konfiguriert ist, Anweisungen zum Nachfüllen des Paketschließfachs (30) in Abhängigkeit von den historischen Geschäftsdaten (72) und der Dienststellenpaketverteilung an die Shopanweisungseinheit (24) zu senden.

6. Dienststelle (10) nach einem der vorhergehenden Ansprüche, wobei die Dienststelle (10) eine autonome Dienststelle (10) ist und die Entscheidung, ob ein Paket in dem Lagerraum (22) oder in dem Paketschließfach (30) gelagert wird, durch die autonome Dienststelle (10) getroffen wird.

7. Dienststelle (10) nach einem der vorhergehenden Ansprüche, wobei der Lagerraum (22) eine Vielzahl von markierten Paketpositionen umfasst, wobei die Dienststellensteuerung (50) dazu konfiguriert ist, Anweisungen zum Lagern eines Pakets mit einer spezifischen Paket-ID an einer spezifischen markierten Paketposition an die Shopanweisungseinheit (24) zu senden und/oder dazu konfiguriert ist, Informationen über ein Paket mit einer spezifischen Paket-ID, das an einer markierten Paketposition gelagert wird, zu empfangen.

8. Dienststelle (10) nach einem der vorhergehenden Ansprüche, wobei die Dienststellensteuerung (50) die Lagerzeit im Paketschließfach für jedes in dem Paketschließfach (30) gelagerte Paket verfolgt, wobei die Dienststellensteuerung (50) ferner dazu konfiguriert ist, Anweisungen zum Ersetzen eines oder mehrerer in dem Paketschließfach (30) gelagerten Pakete in Abhängigkeit von der Lagerzeit im Paketschließfach an die Shopanweisungseinheit (24) zu senden.

9. Verfahren (100) zum Steuern einer Paketverteilung in der Dienststelle an einer Dienststelle (10) nach einem der Ansprüche 1-8, wobei das Verfahren (100) die folgenden Schritte umfasst:
- Empfangen (110) einer Vielzahl von Paketen mit Paket-IDs an der Dienststelle (10);
- Lagern (120) der Vielzahl von Paketen in dem Lagerraum (22) und dem Paketschließfach (30); und nach einer Zeitspanne wird in Abhängigkeit von durch die Dienststellensteuerung (50) empfangenen Anweisungen folgender Schritt durchgeführt:
- Nachfüllen (130) des Paketschließfachs (30) durch Einlegen von Paketen aus dem Lagerraum (22) in das Paketschließfach (30) .

10. Verfahren (100) nach Anspruch 9, wobei der Schritt des Nachfüllens (130) in Abhängigkeit von lokalen historischen Ereignisdaten und der Paketverteilung in der Dienststelle durchgeführt wird, wobei die lokalen historischen Ereignisdaten Abholereignisse und den Zeitpunkt der Abholereignisse beinhalten.

11. Verfahren (100) nach Anspruch 9 oder 10, wobei das Verfahren (100) ferner die folgenden Schritte umfasst:
- Entnehmen (140) eines gelagerten Pakets aus dem Paketschließfach und Lagern des Pakets in dem Lagerraum (22), während ein Paket aus dem Lagerraum (22) in dem Paketschließfach (30) gelagert wird (120);
wobei der Schritt des Entnehmens (140) in Abhängigkeit von einer Lagerzeit im Paketschließfach der im Paketschließfach (30) gelagerten Pakete durchgeführt wird.

12. Verfahren (100) nach einem der Ansprüche 9-11, wobei das Verfahren (100) ferner einen folgenden Schritt umfasst:
- Empfangen (150) eines Empfängerabholmusters (74) der Vielzahl von Paketen von einem Verteilungsserver (90), wobei das Empfängerabholmuster (74) historische Daten zu Abholzeiten von Empfängern der Vielzahl von Paketen beinhaltet,
wobei der Schritt des Lagerns (120), der Schritt des Nachfüllens (130) und/oder der Schritt des Entnehmens (140) in Abhängigkeit von dem Empfängerabholmuster (74) durchgeführt werden.

13. Verfahren (100) nach einem der Ansprüche 9-11, wobei das Verfahren (100) einen folgenden Schritt umfasst:
- Empfangen (150) eines durch einen Paketempfänger bereitgestellten bevorzugten Abholzeitfensters,
wobei der Schritt des Lagerns (120), der Schritt des Nachfüllens (130) und/oder der Schritt des Entnehmens (140) in Abhängigkeit von dem bevorzugten Abholzeitfenster durchgeführt werden.

14. Verfahren (200) zum Abholen eines Pakets mit einer Paket-ID an einer Dienststelle (10) nach einem der Ansprüche 1-8, wobei das Verfahren (200) die folgenden Schritte umfasst:
- Übertragen (210) einer Abholanforderung für ein Paket mit einer Paket-ID an die Dienststellensteuerung (50);
- Empfangen (110) einer Paketposition des Pakets mit einer Paket-ID von der Dienststellensteuerung (50); wobei in Abhängigkeit von der Paketposition einer der folgenden Schritte durchgeführt wird:
- Übertragen (210) von Anweisungen an die Schließfach-Kommunikationseinheit (38), wobei die Anweisungen bewirken, dass das Schloss des Fachs (32), in dem sich das Paket mit der Paket-ID befindet, entriegelt wird; oder
- Übertragen (210) von Anweisungen an die Shopanweisungseinheit (24) zum Abholen und Übergeben des Pakets mit der Paket-ID; und
- Abholen (220) des Pakets mit der Paket-ID.

15. Verfahren (200) zum Abholen eines Pakets nach Anspruch 14, wobei der Schritt des Übertragens (210) einer Abholanforderung durch eine Drittanbietervorrichtung (80) durchgeführt wird, wobei die Drittanbietervorrichtung (80) ein Smartphone oder ein Laptop oder ein Tablet oder eine lokale Paketshopeinheit ist.

## Revendications

1. Point de service (10) pour la distribution d'une pluralité de colis, dans lequel le point de service (10) comprend
- un point relais (20) qui est un point relais piloté pour un transfert manuel de colis, le point relais (20) comprend
- une salle de stockage (22) pour stocker la pluralité de colis, et
- une unité d'instruction de point relais (24) comportant un écran pour afficher des instructions ;
- un casier de colis (30) positionné à l'intérieur du point relais (20) ou positionné à proximité immédiate du point relais (20), le casier de colis (30) comprenant
- une pluralité de compartiments (32) pour stocker des colis et la pluralité de compartiments (32) comprennent une porte de compartiment (34) pourvue d'un verrou ; et
- une unité de communication de casier (38), et
dans lequel le point relais (20) comprend en outre un contrôleur de point de service (50),
le contrôleur de point de service (50) comprenant
- un stockage lisible par ordinateur (52) pour stocker sur celui-ci un identifiant de colis de chacun de la pluralité de colis et pour stocker une distribution de colis de point de service comportant une position de colis de chacun de la pluralité de colis à l'intérieur du point de service (10) ;
- une unité de communication de point de service (54) pour une communication filaire ou sans fil avec l'unité d'instruction de point relais (24), l'unité de communication de casier (38), des dispositifs tiers (80) et, éventuellement, un serveur de distribution (90) ; et
**caractérisé en ce que**
- un processeur de point de service (56) configuré pour envoyer des instructions à l'unité d'instruction de point relais (24) concernant le remplissage du casier de colis (30) en fonction de la distribution de colis de point de service.

2. Point de service (10) selon la revendication 1, dans lequel le contrôleur de point de service (50), lors d'une demande de collecte d'un colis avec un identifiant de colis provenant d'un dispositif tiers (80), est adapté pour effectuer les étapes suivantes en fonction de la position du colis ;
- transmettre des instructions à l'unité de communication de casier (38), lesquelles instructions provoquent le déverrouillage du verrou du compartiment (32) contenant le colis avec l'identifiant de colis ; ou
- transmettre des instructions à l'unité d'instruction de point relais (24) pour collecter et transférer le colis avec l'identifiant de colis.

3. Point de service (10) selon la revendication 1 ou 2, dans lequel le contrôleur de point de service (50) comprend une unité d'horloge (58) et le contrôleur de point de service (50) est configuré pour stocker un événement de collecte et l'heure de l'événement de collecte sur le stockage lisible par ordinateur (52), générant ainsi des données d'événements historiques locaux (70) ; dans lequel le processeur de point de service (56) est en outre configuré pour envoyer des instructions à l'unité d'instruction de point relais (24) concernant le remplissage du casier de colis (30) en fonction des données d'événement historique local (70) et de la distribution de colis de point de service.

4. Point de service (10) selon l'une quelconque des revendications précédentes, dans lequel le point de service (10) fait partie d'un magasin de proximité, d'un supermarché ou d'un magasin de détail.

5. Point de service (10) selon la revendication 5, dans lequel le contrôleur de point de service (10) reçoit des données historiques de magasin (72) du magasin de proximité, du supermarché ou du magasin de détail, où les données historiques de magasin (72) comportant des données commerciales à séquence temporelle et dans lequel le contrôleur de point de service (50) est en outre configuré pour envoyer des instructions à l'unité d'instruction de point relais (24) concernant le remplissage du casier de colis (30) en fonction des données historiques de magasin (72) et de la distribution de colis de point de service.

6. Point de service (10) selon l'une quelconque des revendications précédentes, dans lequel le point de service (10) est un point de service autonome (10) et la décision de stocker un colis, soit dans la salle de stockage (22), soit dans le casier de colis (30) est prise par le point de service autonome (10) .

7. Point de service (10) selon l'une quelconque des revendications précédentes, dans lequel la salle de stockage (22) comprend une pluralité de positions de colis marquées, dans lequel le contrôleur de point de service (50) est configuré pour envoyer des instructions à l'unité d'instruction de point relais (24) concernant le stockage d'un colis avec un identifiant de colis spécifique à une position de colis marquée spécifique et/ou étant configuré pour recevoir des informations d'un colis avec un identifiant de colis spécifique stocké à une position de colis marquée.

8. Point de service (10) selon l'une quelconque des revendications précédentes, dans lequel le contrôleur de point de service (50) suit une durée de stockage de casier de colis pour chaque colis stocké dans le casier de colis (30), dans lequel le contrôleur de point de service (50) est en outre configuré pour envoyer des instructions à l'unité d'instruction de point relais (24) concernant le remplacement d'un ou de plusieurs colis stockés dans le casier de colis (30) en fonction de la durée de stockage de casier de colis.

9. Procédé (100) pour commander une distribution de colis de point de service au niveau d'un point de service (10) selon l'une quelconque des revendications 1 à 8 ; dans lequel le procédé (100) comprend les étapes de
- réception (110) au niveau du point de service (10) d'une pluralité de colis avec des identifiants de colis ;
- stockage (120) de la pluralité de colis dans la salle de stockage (22) et le casier de colis (30) ; et après une période, l'étape suivante est effectuée en fonction des instructions reçues par le contrôleur de point de service (50) ;
- remplissage (130) du casier de colis (30) en plaçant les colis de la salle de stockage (22) dans le casier de colis (30).

10. Procédé (100) selon la revendication 9, dans lequel l'étape de remplissage (130) est effectuée en fonction des données d'événements historiques locaux et de la distribution de colis de point de service, dans lequel les données d'événements historiques locaux comportent des événements de collecte et l'heure desdits événements de collecte.

11. Procédé (100) selon la revendication 9 ou 10, dans lequel le procédé (100) comprend en outre les étapes de :
- retrait (140) d'un colis stocké dans casier de colis et stockage dudit colis dans la salle de stockage (22), tout en stockant (120) un colis de la salle de stockage (22) dans le casier de colis (30) ;
dans lequel l'étape de retrait (140) est effectuée en fonction d'une durée de stockage de casier de colis des colis stockés dans le casier de colis (30).

12. Procédé (100) selon l'une quelconque des revendications 9 à 11, dans lequel le procédé (100) comprend en outre une étape de
- réception (150) d'un modèle de collecte de destinataire (74) de la pluralité de colis provenant d'un serveur de distribution (90), lequel modèle de collecte de destinataire (74) comporte des données historiques pour les heures de collecte des destinataires de la pluralité de colis,
dans lequel l'étape de stockage (120), l'étape de remplissage (130) et/ou l'étape de retrait (140) sont effectuées en fonction du modèle de collecte de destinataire (74).

13. Procédé (100) selon l'une quelconque des revendications 9 à 11, dans lequel le procédé (100) comprend une étape de
- réception (150) d'un créneau horaire de collecte préféré fourni par un destinataire d'un colis,
dans lequel l'étape de stockage (120), l'étape de remplissage (130) et/ou l'étape de retrait (140) sont effectuées en fonction du créneau horaire de collecte préféré.

14. Procédé (200) pour collecter un colis avec un identifiant de colis à un point de service (10) selon l'une quelconque des revendications 1 à 8, dans lequel le procédé (200) comprend les étapes de
- transmission (210) d'une demande de collecte d'un colis avec un identifiant de colis au contrôleur de point de service (50) ;
- réception (110) en provenance du contrôleur de point de service (50) d'une position de colis du colis avec un identifiant de colis ; dans lequel l'une des étapes suivantes est réalisée en fonction de la position de colis ;
- transmission (210) d'instructions à l'unité de communication de casier (38), lesquelles instructions provoquent le déverrouillage du verrou du compartiment (32) contenant le colis avec l'identifiant de colis ; ou
- transmission (210) d'instructions à l'unité d'instruction de point relais (24) pour collecter et transférer le colis avec l'identifiant de colis ; et
- collecte (220) du colis avec l'identifiant de colis.

15. Procédé (200) de collecte d'un colis selon la revendication 14, dans lequel l'étape de transmission (210) d'une demande de collecte est effectuée par un dispositif tiers (80), dans lequel le dispositif tiers (80) est un smartphone, un ordinateur portable, une tablette ou une unité de point relais local.
